Europäisches Patentamt

European Patent Office

Office européen des brevets

(19)

(11) Numéro de publication: 0 388 345
A2

(12) **DEMANDE DE BREVET EUROPEEN**

(21) Numéro de dépôt: 90480038.0

(22) Date de dépôt: 09.03.90

(51) Int. Cl.⁵: **G01D 5/26, G01D 5/32, G01B 11/26**

(30) Priorité: 13.03.89 FR 8903370

(43) Date de publication de la demande:
19.09.90 Bulletin 90/38

(84) Etats contractants désignés:
AT BE CH DE DK ES FR GB GR IT LI LU NL SE

(71) Demandeur: SPECTEC S.A.
14 avenue Saint Augustin Impasse L.
Gastaud
F-06200 Nice(FR)

(72) Inventeur: Schweizer, Pascal
61, route de Saint Pierre de Féric
F-06000 Nice(FR)

Inventeur: Neveux, Antoine
1 rue du Rocher
MC-98000 Monaco(MC)

Inventeur: Macon, Louis
63 avenue de la Liberté
F-06220 Golfe Juan(FR)

(74) Mandataire: Hautier, Jean-Louis
Cabinet Hautier Office Méditerranéen de
Brevets d'Invention et de Marques 24 rue
Masséna
F-06000 Nice(FR)

(54) **Chaîne de mesure d'angle ou de position optique et à transmission par fibres optiques intrinsèquement linéaire et référencé utilisant une ou plusieurs sources lumineuses.**

(57) La présente invention a pour objet une chaîne de mesure d'angle ou de position, optique et à transmission par fibres optiques, référencée.

Le dispositif comporte une tête de mesure (30) recevant deux ondes lumineuses transportées par une fibre optique d'amenée (29) ; au niveau de la tête de mesure (30), les faisceaux lumineux incidents sont collimatés (34) puis interceptés par un ensemble comprenant un diaphragme fixe (35) et un filtre (36) mobile interceptant une seule des deux ondes lumineuses ; cet ensemble constitue le système de mesure proprement dit ; les signaux lumineux résultants sont alors refocalisés et couplés à une fibre optique de retour qui transporte les signaux vers un photodétecteur. La mesure est linéaire et la chaîne de mesure référencée quel que soit le mode de réalisation de l'invention.

Le dispositif peut être utilisé dans toute application impliquant une mesure d'angle ou de position.

EP 0 388 345 A2

Fig_4

La présente invention a pour objet une chaîne référencée de mesure d'angle ou de mesure de position, ne comportant que des éléments optiques (transport de la lumière par fibre optique jusqu'à une tête de mesure optique et transport de l'information en retour par fibre optique) et ayant un caractère absolu, c'est-à-dire ne fonctionnant pas selon un procédé incrémental.

Dans des dispositifs connus de ce genre, mettant en jeu les propriétés de polarisation de la lumière, le signal détecté (intensité lumineuse) n'est pas proportionnel à la grandeur mesurée (angle ou position).

Il faut inclure une étape de traitement de signal dans la chaîne de mesure et alourdir d'autant le système.

D'autres dispositifs connus sont supposés intrinsèquement linéaires.

Tel est le cas des capteurs optiques à codage numérique et transmission par fibre qui comportent un nombre élevé de fibres optiques associées au diverses positions du capteur ; leur résolution est naturellement limitée par le nombre de fibres mises en place.

Un autre dispositif optique connu de mesure d'angle utilise l'absorption d'un faisceau lumineux à la traversée d'un filtre absorbant ayant la forme d'une couronne dont la densité dépend linéairement de la position angulaire ; ce dispositif possède, en outre, un système de référencement optique de la chaîne de mesure basé sur la méthode du pont de Wheastone optique (méthode qui appartient au domaine public (voir, par exemple, "une technique d'équilibrage dans les capteurs à fibre optique à intensité modulée", B. CULSHAW et al., 2ème conférence internationale sur les fibres optiques, 1984, p.117, VDE-VERLAG GmbH Berlin). Ce dispositif a pour principal défaut que le faisceau lumineux ne coïncide pas avec l'axe de rotation du filtre. Il en résulte un encombrement important. Par ailleurs, il met en oeuvre des coupleurs de fibres optiques, reliant quatre fibres optiques, qui s'avèrent instables dans des conditions d'environnement difficiles (vibrations, variations de température...). Ces instabilités sont en relation avec les variations de répartition modale de l'énergie lumineuse dans les fibres optiques. Enfin, le niveau des pertes dans ce capteur a conduit leurs inventeurs à utiliser des diodes laser à la place de sources optiques à spectre large avec pour conséquence une production de granularité laser au niveau du filtre absorbant qui réduit fortement sa résolution et la répétabilité des mesures.

L'état de la technique peut être défini également par les brevets suivants :
- FR-A-2.589.233 : le codeur comporte : un élément avec une bande dont la transparence est complète vis-à-vis de deux longueurs d'onde L1 et L2 mais varie en fonction de la distance, angulaire ou linéaire, pour une troisième longueur d'onde comprise entre L1 et L2 ; des moyens émetteurs de lumière émettant trois faisceaux de lumière aux trois longueurs d'onde ; un premier coupleur optique mélangeant les faisceaux ; des moyens de transmission optique bidirectionnelle à fibre(s) optique(s) ; un second coupleur optique divisant en trois faisceaux la lumière sortant des moyens après renvoi dans l'élément optique et passage à travers la bande ; trois lecteurs sensibles ; et une unité électronique connectée et déterminant le rapport entre la moyenne des réponses.

- FR-A- 2.589.234 : codeur de position dont l'élément porteur de code comporte au moins une bande dont la transparence varie, pour une longueur d'onde, en sinus et/ou cosinus de la distance, angulaire ou linéaire, à partir d'une origine, et qui comprend un émetteur opto-électronique, un lecteur opto-électronique, une unité de traitement, un coupleur optique bi-directionnel, un diviseur-mélangeur de faisceau optique bidirectionnel, deux micro-miroirs pivotables entre une position active de renvoi de la lumière sur la bande et une position inactive, une source d'alimentation autonome en énergie et une unité électronique de traitement des signaux qui calcule la réponse du lecteur lorsqu'un micro-miroir est en position active et lorsque les deux micro-miroirs sont en position active, la réponse du lecteur lorsque les deux micro-miroirs sont en position inactive étant déduite des autres réponses.

- OPTIC LETTERS n° 8, 11 août 1986, pages 543-545, New York, NY, USA: ce document décrit un dispositif dont le but est différent de celui de la présente invention. Il n'y a pas d'élément optique de révolution selon l'axe optique A-A', pas d'élément de filtrage ou d'occultation ayant une frontière selon l'axe optique A-A'.

- EP-A-0140.574 : Méthode optique pour mesurer les déplacements d'un détecteur qui doivent être utilisés dans une méthode comprenant un conducteur de lumière (5) et un élément réflecteur concave (9) placé de telle façon qu'une extrémité (7) du conducteur de lumière soit au centre de la courbure de l'élément réflecteur. L'élément réflecteur (9) possède plusieurs zones, ayant des coefficients de réflection de lumière différents, à l'intérieur de deux bandes de longueur d'onde différente. Un élément interposé (51) s'interpose entre l'extrémité (7) et l'élément réflecteur (9), l'élément interposé ayant des propriétés de transmission de la lumière qui varient dans l'espace à travers l'élément interposé, dans une direction transversale de l'axe optique de l'élément (9). L'élément interposé (51) et l'élément réflecteur (9) sont disposés de telle sorte qu'ils peuvent se déplacer, relativement l'un à l'autre, dans une direction transversale à l'axe optique de l'élément (9).

- US-A-4.560.272 : détecteur optique comprenant un appareil pour diriger le mouvement angulaire d'un corps éloigné se situant aux environs de trois axes perpendiculaires à partir d'un seul point d'observation. Une cible compacte et entièrement passive est faite pour être attachée au corps, dont le mouvement angulaire doit être détecté. La cible réfléchit les rayons lumineux qui représentent les fonctions de mesure, la plus haute, la plus basse, et de rotation. Les rayons réfléchis sont détectés optiquement et réduits en leurs composants, selon les axes le plus haut, le plus bas et de rotation, qui sont représentés visuellement à travers un seul viseur.

Ce dispositif n'utilise pas de fibres optiques.

JP-A-58 156802 : ce dispositif ne permet pas la mesure angulaire. Il utilise le principe d'occultation et non pas de filtrage. Il n'y a pas de mesure de rotation.

Le dispositif de mesure d'angle selon l'invention est absolu, c'est-à-dire non incrémental, intrinsèquement linéaire et référencé. Il n'utilise que des composants optiques aussi bien au niveau de la tête de mesure qui constitue le capteur optique proprement dit, que du transport des ondes lumineuses vers la tête de mesure et des signaux lumineux résultant de la mesure. La linéarité intrinsèque de la mesure est assurée par le principe même de la mesure et les propriétés de symétrie des faisceaux lumineux au niveau de la tête de mesure.

Différents moyens de référencement de la chaîne de mesure sont mis en oeuvre selon le mode choisi pour l'exécution de l'invention.

Le fonctionnement du dispositif conformément à l'invention est indépendant de la répartition modale de l'énergie des ondes lumineuses à l'intérieur des fibres optiques ; le dispositif possède donc une très grande stabilité vis à vis des pertubations extérieures s'exerçant sur la chaîne de mesure (vibrations, variations de température...).

Par ailleurs, ce dispositif ne contenant que des éléments optiques est naturellement protégé contre les pertubations électro-magnétiques.

L'utilisation de sources lumineuses non cohérentes lui confère une excellente résolution, en évitant l'apparition de granularité laser au niveau de la tête de mesure.

Enfin, quel que soit le mode d'exécution de l'invention, la tête de mesure présente un très faible encombrement, ce qui lui confère un avantage considérable par rapport aux systèmes précités.

Le dispositif, quel que soit le mode de réalisation de l'invention, comporte notamment une tête de mesure recevant une ou plusieurs ondes lumineuses provenant de sources optiques incohérentes (spectre large centré autour d'une longueur d'onde) et transportées par une fibre optique d'amenée présentant une symétrie de révolution. Au niveau de la tête de mesure, les faisceaux lumineux incidents sont collimatés puis interceptés par un ensemble de diaphragmes et/ou de filtres (absorbants ou interférentiels), fixes et mobiles, qui constitue le système de mesure proprement dit. Les signaux lumineux résultants sont alors refocalisés et couplés à une fibre optique de retour qui transporte les signaux vers une détecteur d'intensité. Ledit dispositif possède un axe caractéristique qui est l'axe de symétrie des optiques d'entrée et de sortie ; les diaphragmes et/ou filtres sont fixes ou tournent autour de cet axe.

Selon une conception encore plus générale de l'invention, on distinguera premièrement des éléments optiques fixes et de symétrie de révolution autour d'un axe optique commun définissant l'axe de la tête de mesure et destinés à mettre en forme les ondes lumineuses sortant de la fibre d'amenée pour permettre la mesure puis le recouplage, total ou partiel, à la fibre optique de retour des signaux lumineux résultants et, deuxièmement, un ensemble d'éléments d'occultation et/ou de filtrage, fixes et mobiles, possédant chacun un axe de symétrie passant par l'axe du système et susceptibles de tourner, le cas échéant, autour de cet axe et destinés à effectuer la mesure.

Premièrement une seule onde lumineuse est dirigée vers la tête de mesure et le système de mesure est constitué de deux diaphragmes dont l'un est fixe et l'autre susceptible de tourner autour de l'axe de la tête optique.

Un moyen de référencement de la chaîne de mesure est assuré par la mise en oeuvre d'un pont de Wheastone optique.

Premièrement deux ondes lumineuses de longueurs d'onde différentes sont injectées dans la fibre d'amenée et deuxièmement le système de mesure est constitué d'un filtre sélectif interceptant complètement une des deux ondes lumineuses et laissant passer l'autre et d'un diaphragme ou bien d'un deuxième filtre.

Premièrement deux ondes lumineuses de longueurs d'onde différentes sont injectées dans la fibre d'amenée et deuxièmement le système de mesure est constitué d'un pavé de deux filtres sélectifs hémi-circulaires juxtaposés suivi d'un diaphragme ou bien d'un second filtre ; chaque élément constituant le pavé filtrant laisse passer complètement une des deux ondes lumineuses et intercepte l'autre.

Premièrement trois ondes lumineuses de longueurs d'onde différentes sont injectées dans la fibre d'amenée et deuxièmement le système de mesure est constitué d'un pavage, fixe ou tournant, de trois filtres sélectifs bloquant une ou plusieurs des ondes lumineuses incidentes et suivi ou précédé d'un filtre ou bien diaphragme fixe ou tournant.

Premièrement la tête de mesure possède une voie optique principale et une voie optique secondaire excentrée par rapport à la voie principale permettant d'effectuer une mesure destinée à discerner le secteur angulaire de 180° d'étendue dans lequel est effectuée la mesure d'angle et deuxièmement deux fibres optiques de retour permettant d'assurer le transfert des différents signaux résultant de ces mesures.

Les divers éléments optiques permettant d'effectuer la mesure peuvent posséder des caractéristiques géométriques et/ou structurelles propres à minimiser les effets de diffraction des ondes lumineuses à leurs frontières.

Un moyen d'asservissement des intensités émises par les sources lumineuses, à un niveau constant, est mis en oeuvre.

Un moyen mécanique de démultiplication, lié à l'axe de rotation du diaphragme mobile de la tête de mesure, permet d'accéder à une plus grande étendue de mesure angulaire.

Un dispositif mécanique est adapté à la tête de mesure permettant de transformer un mouvement rectiligne en mouvement de rotation.

Les faisceaux lumineux, sur lesquels intervient le système de mesure, possèdent une symétrie de révolution parfaite qui résulte de la symétrie cylindrique de la fibre, de la qualité de l'extrémité de la fibre et de la coïncidence de l'axe du faisceau émergeant de la fibre d'amenée et de l'axe de la tête de mesure.

Bien entendu, quel que soit le mode de réalisation de l'invention, des sources optiques cohérentes pourront être mises en oeuvre à la place des sources à spectre large.

Quel que soit le mode de réalisation de l'invention (nombre d'ondes lumineuses introduites, configuration des diaphragmes et des filtres à l'intérieur de celles-ci, il est possible de véhiculer par la fibre optique d'amenée les signaux résultant de la mesure ; concurremment, des éléments optiques fixes ou mobiles, et destinés à réfléchir tout ou partie des ondes lumineuses incidentes, sont situés à l'intérieur de la tête de mesure et sont susceptibles, le cas échéant, de participer directement au processus de la mesure.

Quel que soit le mode de réalisation de l'invention (nombre d'ondes lumineuses introduites, configuration des diaphragmes et des filtres à l'intérieur de celles-ci, il est possible de situer la fibre optique de retour à côté de la fibre optique d'amenée afin que les extrémités de la fibre optique d'amenée et de la fibre optique de retour soient situées dans le plan focal du système optique fixe et de symétrie de révolution destiné à mettre en forme le faisceau lumineux, et symétriquement par rapport à l'axe de symétrie des optiques ; concurremment,

des éléments optiques fixes ou mobiles, et destinés à réfléchir tout ou partie des ondes lumineuses incidentes, sont situés à l'intérieur de la tête de mesure et sont susceptibles, le cas échéant, de participer directement au processus de la mesure.

Dans la suite de cette présentation sont exposés, de manière non exhaustive, et à titre purement démonstratif, quelques modes de réalisation de la présente invention.

Le dispositif, selon un premier mode de réalisation de l'invention, comporte une tête de mesure recevant une seule onde lumineuse non cohérente provenant d'une source optique de spectre large centré autour d'une longueur d'onde donnée et transportée par une fibre optique d'amenée.

Au niveau de la tête de mesure, le faisceau lumineux incident est collimaté, puis intercepté par un ensemble de deux diaphragmes, mobile et fixe, qui constitue le système de mesure proprement dit. Le signal lumineux résultant est alors refocalisé et couplé à une fibre optique de sortie qui transporte le signal vers un détecteur d'intensité.

Le système de mesure proprement dit, est constitué de deux diaphragmes demi-plans dont les arêtes passent par l'axe du système. Le premier diaphragme est fixe et intercepte la moitié du faisceau lumineux collimaté incident. Il est suivi d'un diaphragme mobile, susceptible de tourner autour de cet axe et qui intercepte une énergie lumineuse proportionnelle à l'angle dont il est tourné. L'étendue de mesure de ce dispositif est donc de 180°, avec une résolution et une précision qui ne dépendent que de la qualité du dispositif mécanique qui guide la rotation du diaphragme mobile. La symétrie de révolution du faisceau lumineux et le principe même de la mesure permettent de s'affranchir des problèmes liés à la répartition modale à l'intérieur des fibres et d'assurer une mesure intrinsèquement linéaire de l'angle dont est tourné l'axe entraînant le diaphragme mobile.

Enfin, l'axe du faisceau lumineux étant confondu avec l'axe du système, l'ensemble est compact et susceptible d'un haut degré d'intégration.

Des problèmes éventuels d'instabilité dûs aux phénomènes de diffraction par les bords des diaphragmes et associés aux fluctuations de répartition modale à l'intérieur de la fibre d'amenée peuvent être compensés par un usinage des bords des diaphragmes comme le montrent, par exemple, les résultats relatés dans : "Réduction des erreurs de diffraction en radiométrie au moyen d'ouvertures dentelées ; L.P. BOIVIN ; Optique appliquée Vol. 17 N°20 ; p.3323". D'autres techniques de correction de diagrammes de diffraction peuvent être appliquées, comme la réalisation de diaphragmes dont le bord utile n'est pas complètement opaque mais présente une absorption variable.

Selon un mode préférentiel d'exécution de ce premier mode de réalisation de l'invention, la chaîne de mesure du dispositif est référencée par un pont de Wheastone optique.

Selon une première variante de ce premier mode de réalisation de l'invention, le mécanisme de rotation du diaphragme mobile est démultiplié et permet d'accéder à une plus grande étendue de mesure.

Selon une deuxième variante de ce premier mode de réalisation de l'invention, le mécanisme de rotation du diaphragme mobile est couplé à une crémaillère liée à un déplacement rectiligne et permet d'accéder de manière intrinsèquement linéaire à une mesure de position.

Selon un deuxième mode de réalisation de l'invention, deux ondes lumineuses non cohérentes de longueurs d'onde différentes $\lambda_1$ et $\lambda_2$ sont injectées dans une fibre optique qui les guide jusqu'à la tête de mesure. Le système de mesure proprement dit diffère du système décrit selon le premier mode de réalisation de la présente invention, en ce que l'un des deux diaphragmes est remplacé par une lame tournante filtrant de manière exclusive une seule des deux ondes lumineuses. Suivant le mode d'exécution préféré, l'élément mobile permettant de réaliser la mesure sera la lame ou bien le diaphragme et pourra précéder ou suivre l'élément fixe. Suivant le mode d'exécution préféré, la lame filtrante sera soit un filtre absorbant complètement une des deux ondes lumineuses, soit un filtre interférentiel réfléchissant totalement une des deux ondes lumineuses.

La symétrie axiale des deux faisceaux lumineux est assurée notamment par la symétrie cylindrique de la fibre d'amenée et la géométrie de la tête de mesure. Cette propriété de symétrie axiale des deux faisceaux lumineux et le principe même de la mesure font que les deux ondes lumineuses peuvent avoir des répartitions modales différentes au niveau de la tête de mesure, sans que la mesure elle-même en soit affectée. Il en résulte que la linéarité intrinsèque de la mesure est assurée. Enfin, il est aujourd'hui démontré (voir "Etude des caractéristiques de transmission fonctions de la longueur d'onde, dans les systèmes mettant en oeuvre des capteurs à fibres optiques",R.JONES, K.W.JONES, Sciences optiques, 27 n° 1, (1988)-.pp.23-29) que les pertes en ligne pour deux ondes lumineuses de fréquences voisines sont équivalentes à mieux que 0,01%. Le dispositif selon cette deuxième version de l'invention est donc d'emblée référencé, puisque la moitié de l'intensité de l'une des deux ondes lumineuses est toujours transmise. Le rapport des intensités transmises est donc rigoureusement proportionnel à l'angle entre le diaphragme et le filtre.

Selon une première variante de ce deuxième mode de réalisation de l'invention, le mécanisme de rotation du diaphragme mobile est démultiplié et permet d'accéder à une plus grande étendue de mesure.

Selon une deuxième variante de ce deuxième mode de réalisation de l'invention, le mécanisme de rotation du diaphragme mobile est couplé à une crémaillère liée à un déplacement rectiligne et permet d'accéder de manière intrinsèquement linéaire à une mesure de position.

Selon un troisième mode de réalisation de l'invention, deux ondes lumineuses non cohérentes de longueurs d'onde différentes $\lambda_1$ et $\lambda_2$ sont injectées dans une fibre optique qui les guide jusqu'à la tête de mesure. Le système de mesure proprement dit est constitué d'un diaphragme et de deux filtres sélectifs hémi-circulaires juxtaposés interceptant complètement une des deux ondes lumineuses et laissant passer l'autre.

Les remarques faites dans l'exposé du deuxième mode de réalisation de l'invention, concernant la linéarité de la mesure et son référencement, demeurent valables pour ce troisième mode de réalisation de l'invention ; dans ce cas, il convient d'effectuer le rapport de la différence des intensités à leur somme et on obtient une échelle linéaire allant de - 1 à + 1, proportionnellement à l'angle dont est tourné le diaphragme sur une étendue de 180°.

Selon une première variante de ce troisième mode de réalisation de l'invention, le mécanisme de rotation du diaphragme mobile est démultiplié et permet d'accéder à une plus grande étendue de mesure.

Selon une deuxième variante de ce troisième mode de réalisation de l'invention, le mécanisme de rotation du diaphragme mobile est couplé à une crémaillère liée à un déplacement rectiligne et permet d'accéder de manière intrinsèquement linéaire à une mesure de position.

Selon un quatrième mode de réalisation de l'invention, trois ondes lumineuses non cohérentes de longueurs d'onde différentes $\lambda_1$, $\lambda_2$ et $\lambda_3$ sont injectées dans une fibre optique qui les guide jusqu'à la tête de mesure. Le système de mesure proprement dit est constitué d'un pavage, fixe ou tournant, de filtres absorbants ou interférentiels bloquant une ou plusieurs ondes lumineuses parmi les précédentes, suivi d'un filtre ou d'un diaphragme fixe ou tournant.

L'utilisation de trois longueurs d'onde et d'une tête de mesure de ce type permet d'effectuer une mesure d'angle sur une étendue de 360° sans ambiguïté. De nombreuses conceptions de la tête de mesure sont envisageables qui mettent en oeuvre des jeux de filtres et de diaphragmes fixes ou susceptibles de tourner autour de l'axe de la tête de mesure.

Selon une variante de ce quatrième mode de réalisation de l'invention, le mécanisme de rotation du filtre mobile est démultiplié et permet d'accéder à une plus grande étendue de mesure.

Selon une autre variante de ce quatrième mode de réalisation de l'invention, le mécanisme de rotation du diaphragme mobile est couplé à une crémaillère liée à un déplacement rectiligne et permet d'accéder de manière intrinsèquement linéaire à une.mesure de position.

Selon un cinquième mode de réalisation de l'invention, deux ondes lumineuses non cohérentes de longueurs d'onde différentes $\lambda_1$ et $\lambda_2$ sont injectées dans une fibre optique qui les guide jusqu'à la tête de mesure. Une optique de collimation est suivie d'un diaphragme présentant, premièrement, une ouverture circulaire centrée sur l'axe de la tête de mesure et, deuxièmement, une plus petite ouverture circulaire excentrée. Deux fibres optiques sont prévues en retour et par suite deux optiques de focalisation ; une première fonctionne dans l'axe de la tête de mesure et ne recueille que la lumière sélectionnée par l'ouverture principale du diaphragme d'entrée et les diaphragmes et éléments filtrants de la tête de mesure ; l'autre optique recueille la lumière provenant de l'ouverture excentrée du diaphragme. Le système de mesure proprement dit est constitué de deux filtres hémi-circulaires justaposés, opaques à l'une ou l'autre des deux longueurs d'onde, suivis ou précédés d'un diaphragme dont l'arête passe précisément par l'axe de la tête de mesure et qui constitue l'élément tournant du système. Le rapport de la différence des intensités transmises à leur somme par la voie centrale de cette tête de mesure permet d'accéder à une étendue de mesure de 360°, de manière référencée. La transmission ou non, par le diaphragme tournant, de la lumière provenant de l'ouverture latérale du diaphragme de l'optique d'entrée permet d'identifier la plage angulaire (0°-180° ou 180°-360°) dans laquelle s'effectue la mesure, qui demeure intrinsèquement linéaire.

Selon une variante de ce cinquième mode de réalisation de l'invention, le mécanisme de rotation du filtre mobile est démultiplié et permet d'accéder à une plus grande étendue de mesure.

Selon une autre variante de ce cinquième mode de réalisation de l'invention, le mécanisme de rotation du diaphragme mobile est couplé à une crémaillère liée à un déplacement rectiligne et permet d'accéder de manière intrinsèquement linéaire à une mesure de position.

Selon un sixième mode de réalisation de l'invention, la tête optique de mesure fonctionne en réflexion. Les extrémités des fibres optiques d'amenée et de retour sont situées dans le plan focal du système optique de collimation et symétriquement par rapport à l'axe de symétrie A-A' de la tête de mesure. Le faisceau lumineux incident est collimaté, puis intercepté par un ensemble de diaphragmes et/ou de filtres mobiles et fixes qui constitue le système de mesure proprement dit. Le faisceau lumineux résultant est ensuite réfléchi par un miroir plan fixe ou mobile placé normalement à l'axe de symétrie A-A', puis focalisé par le système optique dans la fibre optique de retour. Selon une première variante de ce mode de réalisation, la tête de mesure ne reçoit qu'une seule onde lumineuse non cohérente, le système de mesure proprement dit est constitué de deux diaphragmes demi-plans dont les arêtes passent par l'axe de symétrie A-A'. Le premier diaphragme est fixe et intercepte la moitié du faisceau lumineux collimaté incident, il est suivi d'un diaphragme mobile, susceptible de tourner autour de l'axe A-A' et qui intercepte une énergie lumineuse proportionnelle à l'angle dont il est tourné. Selon une deuxième variante de ce mode de réalisation, la chaîne de mesure optique est référencée par un pont de Wheastone optique. Selon une troisième variante de ce mode de réalisation, deux ondes lumineuses non cohérentes de longueur d'onde différente $\lambda_1$ et $\lambda_2$ sont injectées dans la fibre optique d'amenée. La tête de mesure comporte un filtre interférentiel plan situé avant les deux diaphragmes qui constitue le système de mesure proprement dit. Ce filtre interférentiel plan est placé normalement à l'axe de symétrie A-A', il réfléchit l'onde lumineuse $\lambda_1$, et transmet l'onde lumineuse $\lambda_2$. L'onde lumineuse $\lambda_1$ réfléchie par le filtre est focalisée par le système optique dans la fibre optique de retour, et la quantité de lumière réfléchie par le filtre est indépendante de la position du système de mesure. L'onde lumineuse $\lambda_2$ est modulée par le système de mesure composé des deux diaphragmes fixe et mobile, le faisceau optique résultant de l'onde lumineuse $\lambda_2$ est ensuite réfléchi par le miroir plan, puis retraverse le filtre interférentiel avant d'être focalisé par le système optique dans la fibre optique de retour. La chaîne de mesure est référencée en faisant le rapport des intensités des deux ondes lumineuses transmises par la fibre de retour.

Les dessins ci-joints sont donnés à titre d'exemple indicatif et non limitatif. Ils représentent un mode de réalisation préféré selon l'invention. Ils permettront de comprendre aisément l'invention.

Cinq planches de figures sont annexées.

La figure 1, planche 1/6, représente une chaîne optique de mesure d'angle selon le premier mode de réalisation de la présente invention comportant notamment un moyen de référencement de la chaîne de mesure par un pont de Wheastone optique.

La figure 2, planche 1/6, est une vue éclatée de la tête de mesure angulaire, c'est-à-dire du capteur optique angulaire proprement dit, selon le premier mode de réalisation de l'invention.

La figure 3, planche 2/6, représente une chaîne optique de mesure d'angle selon le deuxième mode de réalisation de la présente invention et dans laquelle les intensités des sources lumineuses sont maintenues à des niveaux constants par asservissement.

La figure 4, planche 2/6, est une vue éclatée de la tête de mesure angulaire selon le deuxième mode de réalisation de la présente invention.

La figure 5, planche 3/6, est une vue éclatée de la tête de mesure angulaire selon un mode d'exécution préféré du troisième mode de réalisation de la présente invention.

La figure 6, planche 3/6, décrit le fonctionnement de la tête de mesure selon un mode d'exécution préféré du troisième mode de réalisation de l'invention. Elle comporte les tracés des intensités détectées aux deux longueurs d'onde en jeu $\lambda_1$ et $\lambda_2$ en fonction de l'angle entre le diaphragme et le pavé composé des deux filtres F1, F2 ; chaque filtre laisse passer une des deux ondes lumineuses et intercepte l'autre.

La figure 7, planche 4/6, est une vue éclatée de la tête de mesure angulaire selon un mode d'exécution préféré du quatrième mode de réalisation de la présente invention.

La figure 8, planche 4/6, décrit le fonctionnement de la tête de mesure selon un mode d'exécution préféré du quatrième mode de réalisation de la présente invention. Elle comporte les tracés des intensités détectées aux trois longueurs d'onde en jeu $v$, $R$ et $B$, en fonction de l'angle entre le diaphragme et le pavé composé des trois filtres $F_V$, $F_R$ et $F_B$ ; chaque filtre intercepte une des trois ondes lumineuses et laisse passer les deux autres.

La figure 9, planche 5/6, représente une chaîne optique de mesure d'angle selon le cinquième mode de réalisation de la présente invention.

La figure 10, planche 5/6, est une vue éclatée de la tête de mesure angulaire selon un mode d'exécution préféré du cinquième mode de réalisation de la présente invention.

La figure 11, planche 6/6, est une vue éclatée de la tête de mesure angulaire selon un mode d'exécution préféré du sixième mode de réalisation de la présente invention.

La figure 12 est une variante du sixième mode de réalisation selon lequel le diaphragme demi-plan est solidaire du miroir plan.

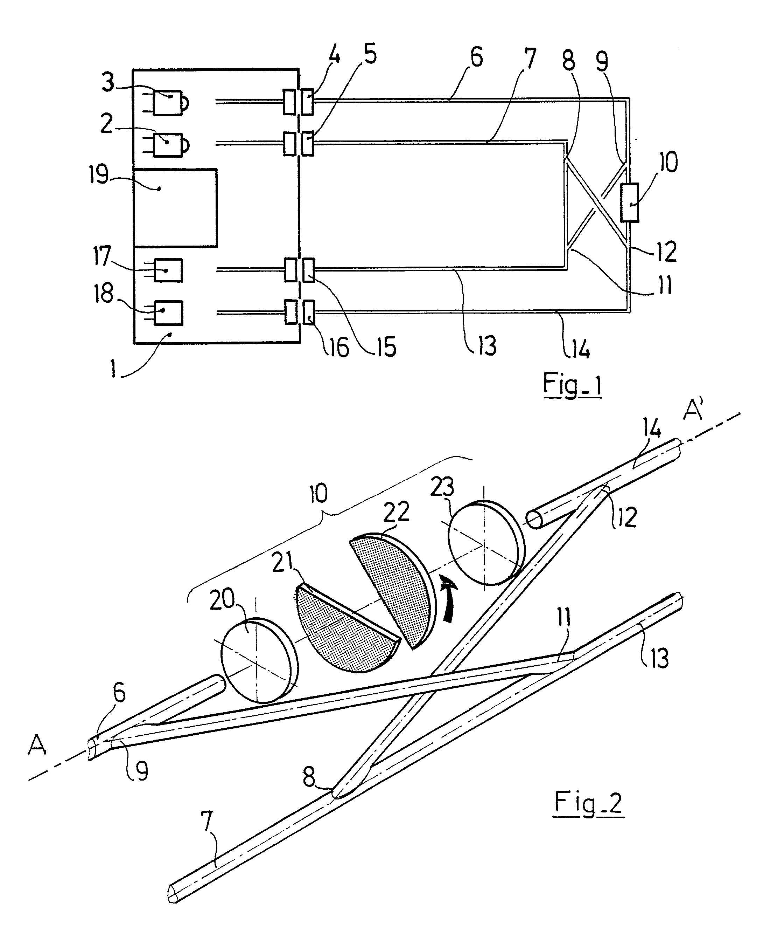

La figure 1, planche 1/6, représente une chaîne optique de mesure d'angle selon la première version de la présente invention comportant notamment un moyen de référencement de la chaîne de mesure par un pont de Wheastone optique.

Le boîtier de commande 1 contient deux sources lumineuses 2 et 3 modulées en intensité à des fréquences différentes $f_1$ et $f_2$.

Les connecteurs 4 et 5 permettent de coupler la lumière provenant de 2 et 3 aux fibres optiques d'amenée 6 et 7. Chaque connecteur peut être suivi, le cas échéant, d'un mélangeur de modes et d'un évacuateur de modes non propagatifs (non représentés sur la figure 1).

Les coupleurs de fibres 8 et 9 permettent de diriger les ondes lumineuses provenant des deux sources 2 et 3 vers la tête de mesure 10 et les coupleurs 11 et 12 qui débouchent sur les fibres 13 et 14. Les fibres 13 et 14 sont reliées au boîtier de commande 1 par les connecteurs 15 et 16.

Les ondes lumineuses provenant des fibres 13 et 14 sont détectées par les photodiodes 17 et 18.

Un module électronique 19 permet d'assurer la modulation des deux sources lumineuses 2 et 3 et le traitement des signaux recueillis par les photodiodes 17 et 18.

La tête de mesure 10, représentée par la figure 2, planche 1/6, est constituée d'un système 20 permettant de collimater la lumière provenant de la fibre 6 via le coupleur 9 et de diriger le faisceau parallèle et de symétrie cylindrique ainsi obtenu, vers un diaphragme demi-plan fixe 21 dont l'arête coupe le faisceau lumineux au niveau de son axe A-A'. Le faisceau résultant rencontre un autre diaphragme 22, du même type, susceptible de tourner autour de l'axe A-A'. Ce diaphragme tournant intercepte une fraction de l'énergie lumineuse transmise par le précédent, proportionnelle à l'angle dont il est tourné. Enfin, un système optique 23 permet de focaliser le faisceau transmis par l'ensemble des deux diaphragmes et de le coupler à la fibre de retour 14 via le coupleur 12.

Les photodiodes 17 et 18 captent alternativement des ondes lumineuses modulées aux fréquences $f_1$ et $f_2$. Dans ces conditions, la transmission de la tête du capteur est donnée par :
$T = \{f_1(17)\ f_2(18)\}$ / $\{f_1(18)\ f_2(17)\}$ où $f_i(j)$ est l'intensité lumineuse modulée à la frequence $f_i$ et recueillie par la photodiode j.

Cette transmission est indépendante des dérives des sources ou des récepteurs et est indépendante des pertes en ligne sur tout le circuit optique (variations dues aux connecteurs ou à la longueur des lignes, par exemple).

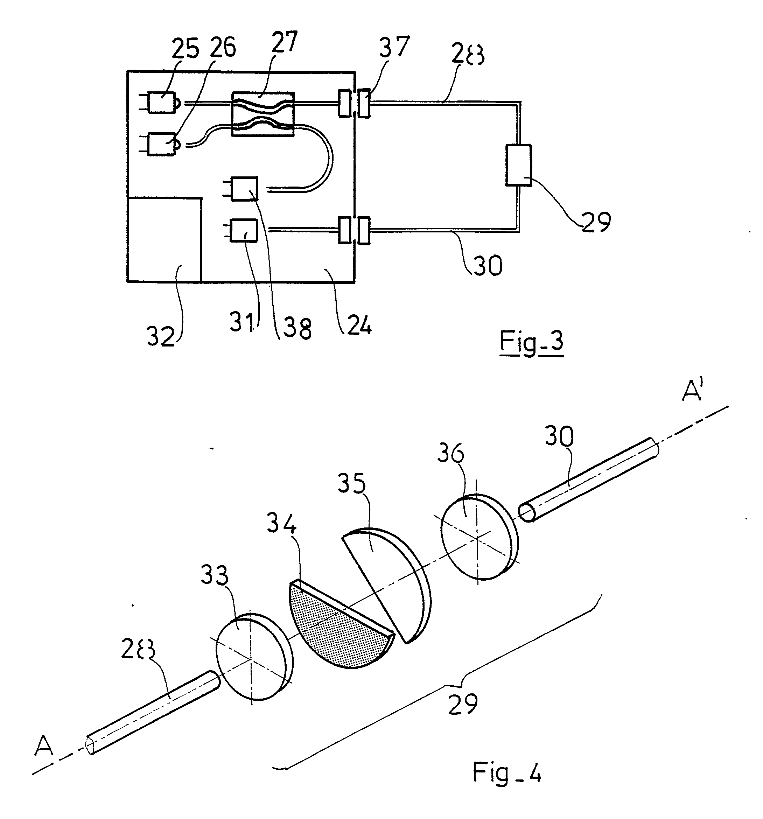

La figure 3, planche 2/6, représente une chaîne optique de mesure d'angle selon la deuxième version de la présente invention. Le boîtier de commande 24 contient deux sources lumineuses 25 et 26 de longueurs d'onde différentes.

Un coupleur de fibres en X 27 permet de diriger les deux ondes émises par les deux sources 25 et 26 vers le connecteur 38 ou bien vers la photodiode 28. Le connecteur 38 permet de coupler la lumière provenant des deux sources 25 et 26 à la fibre optique d'amenée 29. Le connecteur 38 peut être suivi, le cas échéant, d'un mélangeur de modes et d'un évacuateur de modes non propagatifs (non représentés sur la figure 3).

La fibre optique 29 transporte les ondes lumineuses jusqu'à la tête de mesure 30. Les signaux de mesure sont ensuite transmis au boîtier de commande 24 par la fibre optique 31. Les signaux de mesure sont détectés par la photodiode 32.

Un module électronique 33 permet de synchroniser l'émission alternée des deux sources lumineuses 25 et 26 et la détection des signaux correspondants sur la photodiode 32.

Ce module électronique 33 permet, par ailleurs, d'asservir la puissance d'émission des diodes 25 et 26 à un niveau constant, en utilisant les signaux délivrés par la photodiode 28.

La tête de mesure 30, représentée par la figure 4, est constituée d'un système 34 permettant de collimater la lumière provenant de la fibre d'amenée 29 et de diriger le faisceau parallèle et de symétrie cylindrique ainsi obtenu, vers un diaphragme demi-plan fixe 35 dont l'arête coupe le faisceau lumineux au niveau de son axe A-A'. Le faisceau résultant rencontre un filtre 36 susceptible de tourner autour de l'axe A-A'. Ce filtre, traité, n'intercepte que l'une des deux ondes lumineuses. En mesurant alternativement les intensités lumineuses correspondant aux deux longueurs d'onde et en effectuant le rapport de celles-ci, on réalise une mesure linéaire et référencée de la position angulaire du filtre 36. Enfin, un système optique 37 permet de coupler le faisceau résultant à la fibre de retour 31.

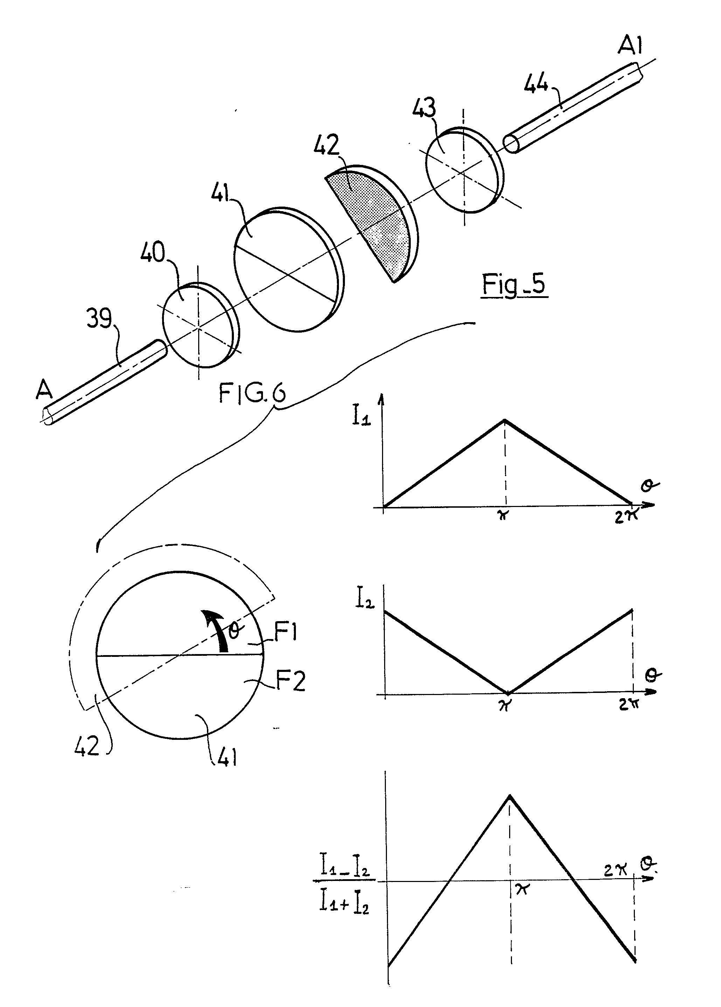

La figure 5, planche 3/6 est une vue éclatée de la tête de mesure angulaire selon un mode d'exécution préféré du troisième mode de réalisation de la présente invention. Cette tête de mesure est constituée d'un système 40 permettant de collimater la lumière provenant de la fibre d'amenée 39 et de diriger le faisceau parallèle et de symétrie cylindrique ainsi obtenu, vers un pavé fixe 41 constitué de deux filtres hémi-circulaires juxtaposés interceptant respectivement chacune des deux ondes lumineuses et laissant passer l'autre. Le faisceau résultant rencontre un diaphragme 42 susceptible de tourner autour de l'axe A-A'. En mesurant alternativement les intensités lumineuses correspondant aux deux longueurs d'onde et en effectuant le rapport de leur différence à leur somme, on réalise une mesure linéaire et référencée de la position angulaire du diaphragme 42. Enfin un système optique 43 permet de coupler les signaux lumineux résultants à la fibre de retour 44.

La figure 6, planche 3/6, décrit le fonctionnement de cette tête de mesure. Elle comporte les tracés des intensités $I_1$ et $I_2$ détectées aux deux longueurs d'onde en jeu $\lambda_1$ et $\lambda_2$, en fonction de l'angle $\theta$ entre le diaphragme et le pavé composé des deux filtres $F_1$, $F_2$ ; chaque filtre laissant passer une des deux ondes lumineuses et interceptant l'autre. Le rapport $(I_1 - I_2)/(I_1 + I_2)$ est directement proportionnel à l'angle dont est tourné le diaphragme sur chacune des plages angulaires (0°-180°) et (180°-360°).

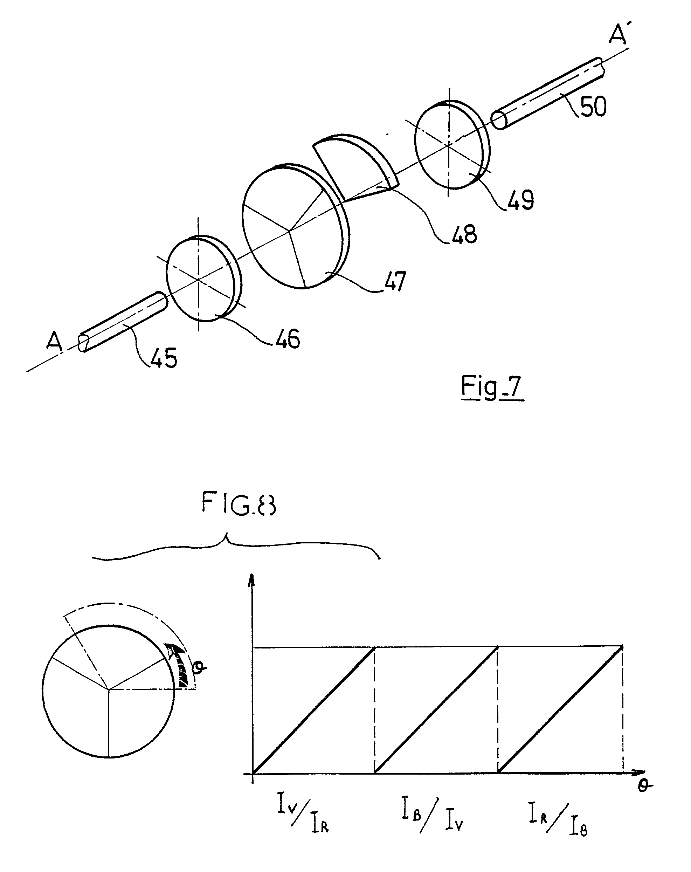

La figure 7, planche 4/6, est une vue éclatée de la tête de mesure angulaire selon un mode d'exécution préféré du quatrième mode de réalisation de la présente invention.

Cette tête de mesure est constituée d'un système 46 permettant de collimater la lumière provenant de la fibre d'amenée 45 et de diriger le faisceau parallèle et de symétrie cylindrique ainsi obtenu, vers un pavé fixe 47 constitué de trois filtres sectoriels de 120° d'angle au centre juxtaposés et laissant passer, respectivement chacune des trois ondes lumineuses et interceptant les deux autres. Le faisceau résultant rencontre un diaphragme 48 ayant la forme d'un secteur angulaire d'angle au centre 120°, susceptible de tourner autour de l'axe A-A'. En mesurant alternativement les intensités lumineuses correspondant aux trois longueurs d'onde et en effectuant les rapports des intensités, on réalise une mesure linéaire et référencée de la position angulaire du diaphragme 48 sur chacune des plages angulaires (0°-120°), (120°-240°) et (240°-360°).

Enfin, un système optique 49 permet de coupler les signaux résultants à la fibre de retour 50.

La figure 8, planche 4/6, décrit le fonctionnement de cette tête de mesure. Elle comporte les tracés des rapports des intensités détectées aux trois longueurs d'onde en jeu $\lambda_V$, $\lambda_R$ et $\lambda_B$. Les rapports $I_V/I_R$, $I_B/I_V$ et $I_R/I_B$ permettent d'accéder à une mesure linéaire de l'angle dont est tourné le diaphragme sur les plages angulaires (0°-120°), (120°-240°) et (240°-360°) respectivement.

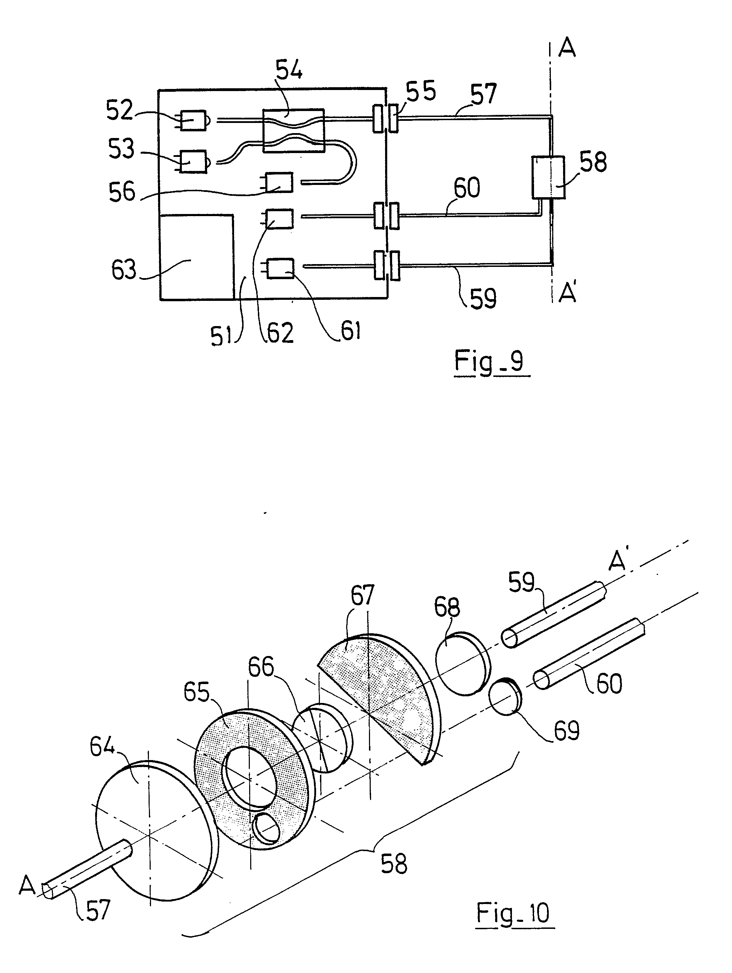

La figure 9, planche 5/6, représente une chaîne optique de mesure d'angle selon le cinquième mode de réalisation de la présente invention. Le boîtier de commande 51 contient deux sources lumineuses 52 et 53 de longueurs d'onde différentes.

Un coupleur de fibres en X 54 permet de diriger les deux ondes émises par les deux sources 52 et 53 vers le connecteur 55 ou bien vers la photodiode 56. Le connecteur 55 permet de coupler la lumière provenant des deux sources 52 et 53 à la fibre optique d'amenée 57. Le connecteur 55 peut être suivi, le cas échéant, d'un mélangeur de modes et d'un évacuateur de modes non propagatifs (non représentés sur la figure 9).

La fibre optique 57 transporte les ondes lumineuses jusqu'à la tête de mesure 58 qui transmet les signaux de mesure au boîtier de commande 51 par les fibres optiques 59 et 60. Les signaux de mesure sont détectés par les photodiodes 61 et 62.

Un module électronique 63 permet de synchroniser l'émission alternée des deux sources lumineuses 52 et 53 et la détection des signaux sur les photodiodes 61 et 62.

Ce module électronique 63 permet, par ailleurs, d'asservir la puissance d'émission des diodes 52 et 53 à un niveau constant, en utilisant les signaux délivrés par la photodiode 56.

La figure 10, planche 5/6, est une vue éclatée de la tête de mesure 58 permettant de mieux comprendre son fonctionnement. Cette tête de mesure est constituée d'un système 64 permettant de collimater la lumière provenant de la fibre d'amenée 57 et de diriger le faisceau parallèle et de symétrie cylindrique ainsi obtenu, vers un diaphragme 65 possédant deux ouvertures circulaires : la première est centrée sur l'axe A-A' et la seconde est excentrée ; elles sont qualifiées respectivement de "principale" et "secondaire".

La lumière ayant franchi l'ouverture principale rencontre un pavé fixe 66 constitué de deux filtres hémi-circulaires juxtaposés interceptant respectivement chacune des deux ondes lumineuses et laissant passer l'autre. Le faisceau résultant rencontre un diaphragme 67 susceptible de tourner autour de l'axe A-A'. Enfin un système optique 68 permet de coupler le faisceau résultant à la fibre de retour 59. En mesurant alternativement, à l'aide de la photodiode 61, les intensités lumineuses correspondant aux deux ondes lumineuses et, en effectuant le rapport de leur différence à leur somme, on réalise une mesure linéaire et référencée de la position angulaire du diaphragme 67.

La lumière ayant franchi l'ouverture secondaire du diaphragme 65 peut être interceptée ou non par le diaphragme tournant 67. Lorsqu'elle n'est pas interceptée par ce diaphragme 67, elle est refocalisée par l'optique 69 et couplée à la seconde fibre de retour 60.

Les photodiodes 61 et 62 recueillent respectivement les ondes provenant des voies de mesure "principale" et "secondaire" et transportées par les fibres optiques de retour 59 et 60. Le signal détecté par la photodiode 61 permet d'identifier dans quel secteur angulaire plan est effectuée la mesure : $(0°-180°)$ ou $(180°-360°)$.

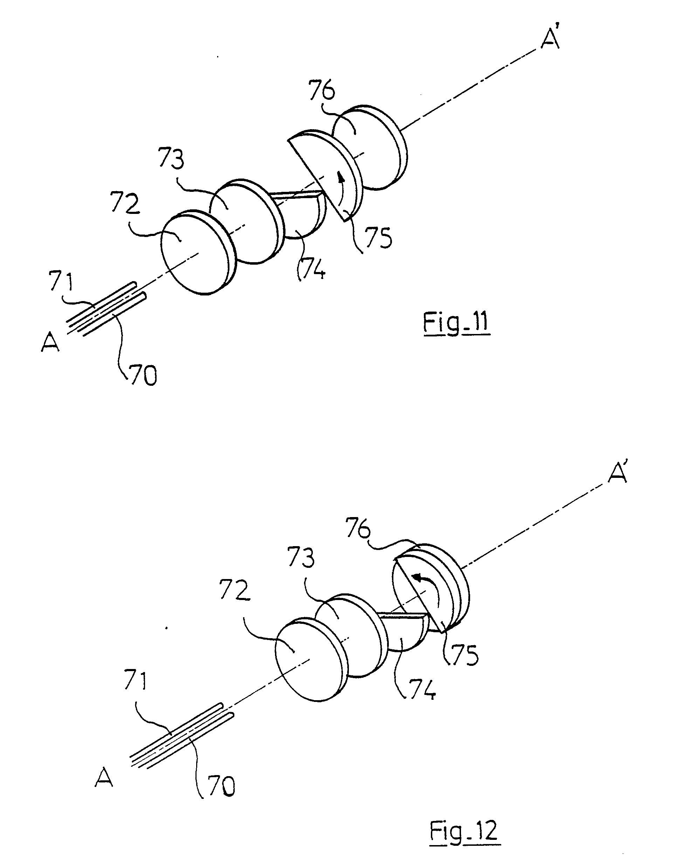

La figure 11, planche 6/6, est une vue éclatée de la tête de mesure angulaire selon un mode d'exécution préféré du sixième mode de réalisation de la présente invention. Cette tête de mesure est constituée d'un système optique 72 permettant de collimater la lumière issue de la fibre optique d'amenée 70 et de refocaliser la lumière retour sur la fibre optique de retour 71. Les extrémités des fibres optiques d'amenée 70 et de retour 71 sont situées dans le plan focal du système optique 72 et symétriquement par rapport à l'axe de symétrie A-A'. Le faisceau collimaté et à symétrie de révolution issue du système optique 72 rencontre un filtre interférentiel plan 73 situé normalement à l'axe de symétrie A-A'. La longueur d'onde λ1 est réfléchie par le filtre 73, et est focalisée par le système optique 72 dans la fibre optique de retour 71. Le faisceau optique collimaté et à symétrie de révolution de la longueur d'onde λ2 est tranmis par le filtre interférentiel 73, il rencontre un diaphragme demi plan fixe 74 dont l'arête coupe le faisceau lumineux au niveau de l'axe A-A'. Le faisceau résultant rencontre un autre diaphragme 75 du même type, susceptible de tourner autour de l'axe A-A'. Ce diaphragme tournant intercepte une fraction de l'énergie lumineuse transmise par le précédent proportionnelle à l'angle dont il est tourné. Le faisceau rencontre ensuite un miroir plan 76 situé normalement à l'axe A-A'. Le faisceau optique réfléchi par le miroir retraverse le filtre interférentiel 73 et est focalisé dans la fibre optique retour 71 par le système optique 72.

La figure 12 est une variante du sixième mode de réalisation selon lequel le diaphragme demi-plan 75 est solidaire du miroir plan 76 ; l'ensemble du diaphragme 75 et du miroir 76 étant susceptible de tourner autour de l'axe A-A'. Le fonctionnement de ce mode de réalisation est identique à celui représenté sur la figure 11.

Le dispositif, quel que soit le mode de réalisation de l'invention, peut être utilisé dans toute application impliquant une mesure d'angle ou de position. Il ne comporte aucun élément électrique ou électronique, en dehors du boîtier de commande qui peut être tenu éloigné du lieu de mesure ; il est donc particulièrement recommandé en milieu explosif, irradié ou encore en présence de fortes pertubations électro-magnétiques. Dans tous les cas, la géométrie "en ligne" de la tête de mesure, c'est-àdire la coïncidence des axes optiques et mécaniques, permet d'obtenir une réelle miniaturisation du dispositif, intéressant tout particulièrement les domaines de l'aéronautique et de la robotique. Enfin, le dispositif, quel que soit le mode de réalisation de l'invention, permet de s'affranchir de tout problème de référencement lié éventuellement à des conditions difficiles d'utilisation (vibrations, variations de température...).

REFERENCES

1. Boîtier de commande
2. Source lumineuse
3. Source lumineuse
4. Connecteur
5. Connecteur
6. Fibre optique d'amenée
7. Fibre optique d'amenée
8. Coupleur de fibre

9. Coupleur de fibre
10. Tête de mesure
11. Coupleur
12. Coupleur
13. Fibre optique de retour
14. Fibre optique de retour
15. Connecteur
16. Connecteur
17. Photodiode
18. Photodiode
19. Module électronique
20. Système collimatant la lumière
21. Diaphragme demi-plan fixe
22. Diaphragme
23. Système optique focalisant le faisceau
24. Boîtier de commande
25. Source lumineuse
26. Source lumineuse
27. Coupleur de fibres
28. Photodiode
29. Fibre optique d'amenée
30. Tête de mesure
31. Fibre optique de retour
32. Photodiode
33. Module électronique
34. Système colimatant la lumière
35. Diaphragme demi-plan fixe
36. Filtre
37. Système optique couplant le faisceau
38. Connecteur
39. Fibre d'amenée
40. Système collimatant la lumière
41. Pavé fixe
42. Diaphragme
43. Système optique couplant les signaux lumineux
44. Fibre de retour
45. Fibre d'amenée
46. Système collimatant la lumière
47. Pavé fixe
48. Diaphragme
49. Système optique couplant les signaux
50. Fibre de retour
51. Boîtier de commande
52. Source lumineuse
53. Source lumineuse
54. Coupleur de fibres en X
55. Connecteur
56. Photodiode
57. Fibre optique d'amenée
58. Tête de mesure
59. Fibre optique
60. Fibre optique
61. Photodiode
62. Photodiode
63. Module électronique
64. Système collimatant la lumière
65. Diaphragme

66. Pavé fixe
67. Diaphragme
68. Système optique couplant le faisceau
69. Optique
70. Fibre optique d'amenée
71. Fibre optique de retour
72. Système optique permettant de collimater la lumière
73. Filtre interférentiel plan
74. Diaphragme demi plan fixe
75. Diaphragme
76. Miroir plan.

## Revendications

1. Dispositif comportant notamment une tête de mesure optique, une fibre optique d'amenée permettant de transporter une ou plusieurs ondes lumineuses vers la tête de mesure et une fibre optique permettant de transporter, en retour, le ou les signaux lumineux résultant de la mesure, et caractérisé par le fait

qu'il comporte notamment une tête de mesure recevant une ou plusieurs ondes lumineuses provenant de sources optiques incohérentes (spectre large centré autour d'une longueur d'onde) et transportées par une fibre optique d'amenée présentant une symétrie de révolution ; au niveau de la tête de mesure, les faisceaux lumineux incidents sont collimatés puis interceptés par un ensemble de diaphragmes et/ou de filtres (absorbants ou interférentiels), fixés et mobiles, qui constitue le système de mesure proprement dit ; les signaux lumineux résultants sont alors refocalisés et couplés à une fibre optique de retour qui transporte les signaux vers une détecteur d'intensité ; ledit dispositif possède un axe caractéristique qui est l'axe de symétrie des optiques d'entrée et de sortie ; les diaphragmes et/ou filtres sont fixes ou tournent autour de cet axe.

2. Dispositif selon la revendication 1, caractérisé par le fait

que les signaux résultant de la mesure sont véhiculés, en retour, par la fibre optique d'amenée et que, concurremment, des éléments optiques fixes ou mobiles et destinés à réfléchir tout ou partie des ondes lumineuses incidentes sont situés à l'intérieur de la tête de mesure et sont susceptibles, le cas échéant, de participer directement au processus de la mesure.

3. Dispositif selon la revendication 1, caractérisé par le fait

que les extrémités des fibres optiques d'amenée et de retour sont situées dans le plan focal du système optique de collimation du faisceau et symétriquement par rapport à l'axe A-A' du système et que, concurremment, des éléments optiques fixes ou mobiles et destinés à réfléchir tout ou partie des ondes lumineuses incidentes, sont situés à l'intérieur de la tête de mesure et sont susceptibles, le cas échéant, de participer directement au processus de la mesure.

4. Dispositif selon les revendications 1 ou 2, capable d'effectuer une mesure sur une étendue de 360° d'angle, caractérisé en ce que, premièrement la tête de mesure possède une voie optique principale définie par les revendications 1 ou 2 et une voie optique secondaire excentrée par rapport à la voie principale permettant d'effectuer une mesure destinée à discerner le secteur angulaire de 180° d'étendue dans lequel est effectuée la mesure d'angle et deuxièmement deux fibres optiques de retour permettant d'assurer le transfert des différents signaux résultant de ces mesures.

5. Dispositif selon les revendications 1, 2 ou 4, caractérisé par le fait qu'une seule onde lumineuse est dirigée vers la tête de mesure (10) et que le système de mesure est constitué de deux diaphragmes dont l'un est fixe (21) et l'autre (22) susceptible de tourner autour de l'axe A-A'.

6. Dispositif selon la revendication 5, caractérisé par le fait qu'un moyen de référencement de la chaîne de mesure est assuré par la mise en oeuvre d'un pont de Wheastone optique.

7. Dispositif selon les revendications 1, 2 ou 4, caractérisé en ce que, premièrement, deux ondes lumineuses de longueurs d'onde différentes sont injectées dans la fibre d'amenée (29) et deuxièmement le système de mesure est constitué d'un filtre sélectif (36) interceptant complètement une des deux ondes lumineuses et laissant passer l'autre et d'un diaphragme ou bien d'un deuxième filtre (35).

8. Dispositif selon les revendications 1, 2 ou 4, caractérisé en ce que, premièrement, deux ondes lumineuses de longueurs d'onde différentes sont injectées dans la fibre d'amenée (39) et deuxièmement le système de mesure est constitué de deux filtres sélectifs hémi-circulaires juxtaposés (41) interceptant complètement une des deux ondes lumineuses et laissant passer l'autre et d'un diaphragme ou bien d'un deuxième filtre (42).

9. Dispositif selon la revendication 3 caractérisé par le fait que premièrement, deux ondes lumineuses de longueurs d'onde différentes $\lambda 1$ et $\lambda 2$ sont injectés dans la fibre d'amenée (70) et un filtre interférentiel plan (73) réfléchissant complètement l'onde lumineuse $\lambda 1$ et laissant passer l'onde lumineuse $\lambda 2$ est situé sur le trajet optique des faisceaux lumineux après le système optique de collimation des faisceaux (72) et est normal à l'axe de symétrie A-

A', deuxièmement le système de mesure est constitué de deux diaphragmes situés après le filtre interférentiel (73) dont l'un est fixe (74) et l'autre (75) susceptible de tourner autour de l'axe A-A' et troisièmement l'onde lumineuse $\lambda 2$ est réfléchie par un miroir plan (76) fixe ou susceptible de tourner autour de l'axe A-A' situé après le système de mesure et normal à l'axe A-A'.

10. Dispositif selon la revendication 9 caractérisé par le fait que le diaphragme mobile (75) est solidaire du miroir plan (76) et l'ensemble de ces deux éléments est susceptible de tourner autour de l'axe A-A'.

11. Dispositif selon les revendications 1 ou 2, capable d'effectuer une mesure sur une étendue de 360° d'angle, caractérisé en ce que, premièrement trois ondes lumineuses de longueurs d'onde différentes sont injectées dans la fibre d'amenée (45) et deuxièmement le système de mesure est constitué d'un pavage (47), fixe ou tournant, de trois filtres sélectifs bloquant une ou plusieurs des ondes lumineuses incidentes et suivi ou précédé d'un filtre ou bien diaphragme (48) fixe ou tournant.

12. Dispositif selon une quelconque des revendications 1, 2, 4, 5, 6, 7 ou 10 caractérisé en ce que les divers éléments optiques permettant d'effectuer la mesure possèdent des caractéristiques géométriques et/ou structurelles propres a minimiser les effets de diffraction des ondes lumineuses à leurs frontières.

13. Dispositif une quelconque des revendications 1, 2, 4, 5, 6, 7 ou 10, caractérisé en ce qu'un moyen d'asservissement des intensités émises par les sources lumineuses, à un niveau constant, est mis en oeuvre.

14. Dispositif selon une quelconque des revendications 1, 2, 4, 5, 6, 7 ou 10, caractérisé en ce qu'un moyen mécanique de démultiplication, lié à l'axe de rotation du diaphragme mobile de la tête de mesure, permet d'accéder à une plus grande étendue de mesure angulaire.

15. Dispositif de mesure de position comportant un système de mesure d'angle selon une quelconque des revendications 1, 2, 4, 5, 6, 7 ou 10, et un dispositif mécanique adapté à la tête de mesure permettant de transformer un mouvement rectiligne en mouvement de rotation.

Fig_1

Fig_2

EP 0 388 345 A2

Fig_3

Fig_4

Fig_5

FIG.6

Fig. 7

FIG.8

$I_V/I_R$ $I_B/I_V$ $I_R/I_B$

Fig_9

Fig_10

Fig_11

Fig_12